# EUROPEAN PATENT SPECIFICATION

(11) **EP 3 988 423 B1**
(45) Date of publication and mention of the grant of the patent: **24.12.2025**
(21) Application number: 21203478.9
(22) Date of filing: 19.10.2021
(51) Int. Cl.: B61L 3/12, B61L 25/02, B61L 27/50

(54) **A MONITORING SYSTEM AND METHOD FOR A RAILWAY NETWORK**
ÜBERWACHUNGS-SYSTEM UND -VERFAHREN FÜR EIN EISENBAHNNETZ
SYSTÈME ET MÉTHODE DE SURVEILLANCE POUR UN RÉSEAU FERROVIAIRE

(30) Priority: 21.10.2020 GB 202016680
(43) Date of publication of application: 27.04.2022
(73) Proprietor: Hitachi Rail Ltd., London, Greater London EC4M 7AW (GB)
(72) Inventor: Corasolla, Bruno, London, EC1N2PB (GB)
(74) Representative: Mewburn Ellis LLP

(56) References cited:
- EP-A1- 3 587 210
- US-A1- 2019 077 427

## Description

### Field of the Invention

The present invention relates to a monitoring system for a railway network, servers, a method, and a bi-modal railway vehicle.

### Background

Due to the expense of fully electrifying a railway network, recent efforts have been focused on the development of bi-modal railway vehicles. Bi-modal railway vehicles can run not only on electrified sections of the railway network, connecting to overhead power lines via pantograph units, but also on non-electrified sections utilising on board power sources (e.g. generator units or batteries).

Such bi-modal trains are known, for example, from EP 2671748, where the power distribution architecture contains two types of circuit: one for energising via the overhead line, and the other for energising from an on board generator unit. Switching suitably between these sources of power allows the vehicle to travel across both non-electrified and electrified sections of the railway network.

It is further known to provide beacons, located at various trackside points, which transmit a signal indicating that there is soon to be a transition between an electrified section and non-electrified section of the railway network (or vice versa). The railway vehicles include an antenna, and monitors for this signal from the transmitter. Once it is detected, an on-board system can automatically initiate a changeover sequence (e.g. from overhead power to generator unit, or vice versa).

However, where communication from the beacon to antenna is not achieved, the vehicle will miss the prompt to initiate the changeover sequence. Failure to recognise this may cause the vehicle to lose power, in examples where the changeover is from overhead line to on board power, or to unnecessarily provide power from the on board power in the alternative. Furthermore, as the beacons are installed at trackside locations, it can often be difficult and/or time consuming to attend their locations for investigation. EP 3587210 A1 proposes a vehicle comprising a first electric power supply and a second electric power supply. US 2019/0077427 A1 proposes an on-board system and train occupancy range calculation method.

### Summary

Accordingly, in a first aspect, embodiments of the invention provide a monitoring system as set out in claim 1.

Advantageously, such a system allows for the remote and timely determination of faults in either or both of the bi-modal railway vehicle or beacon.

Optional features of the invention will now be set out. These are applicable singly or in any combination with any aspect of the invention.

Determining that the bi-modal railway vehicle is faulty may include ascertaining from the location signal whether the bi-modal railway vehicle has passed a beacon and, if so, verifying that no beacon signal was received from the passed beacon. Ascertaining from the location signal whether the bi-modal railway vehicle has passed a beacon may include referencing a database containing the trackside locations of the one or more beacons.

Determining that the bi-modal railway vehicle is faulty includes incrementing, when it has been verified that no beacon signal was received from the passed beacon, a train error counter stored on the server, and determining that the given bi-modal railway vehicle is faulty when the train error counter for that given bi-modal railway vehicle is higher than a train error threshold. The value of the train error threshold may be configurable.

Determining that the bi-modal railway vehicle is faulty may include verifying that a beacon signal from the passed beacon was received by a further bi-modal railway vehicle within a threshold time. The threshold time may be, for example, 24 hours. The threshold time may be configurable.

Determining that the bi-modal railway vehicle is faulty may include ascertaining from the location signal whether the bi-modal railway vehicle has passed a plurality of beacons, and verifying that no beacon signals have been received from the plurality of beacons. Determining that the bi-modal railway vehicle is faulty may further include verifying that the beacon signals have been received from the passed beacons by a further bi-modal railway vehicle within a threshold time. The threshold time may be, for example, 24 hours. The threshold time may be configurable.

Determining that the given beacon is faulty may include verifying that no beacon signal was received from the given beacon as the given bi-modal railway vehicle passed it and ascertaining that the given railway vehicle received a beacon signal from one or more other beacons within a threshold time or travel distance. The threshold time or travel distance may be configurable.

Determining that the given beacon is faulty includes verifying that no beacon signal was received from the given beacon as the given bi-modal railway vehicle passed the give beacon and ascertaining, from a further location signal indicating the location of another bi-modal railway vehicle, that the other bi-modal railway vehicle also did not receive the beacon signal from the given beacon as the other bi-modal railway vehicle passed the given beacon. Each bi-modal railway vehicle which passes the given beacon without receiving the beacon signal causes a beacon error counter stored in the server to be incremented, and the given beacon may be determined as faulty when the beacon error counter exceeds a beacon error threshold. The beacon error threshold may be configurable.

When it is determined that one of the given beacon or given bi-modal railway vehicle is faulty, the server may be configured to send an alert to at least the given bi-modal railway vehicle.

When it is determined that the given beacon is faulty, the server may be configured to identify from a database of scheduled trains a list of bi-modal railway vehicles due to pass by the faulty beacon, and to send an alert to all bi-modal railway vehicles on the list of bi-modal railway vehicles.

Determining that the given beacon is faulty may include comparing an identifier of the beacon to a list of beacons scheduled to be out of utilization, and not determining that the beacon is faulty if the list of beacons scheduled to be out of utilization includes the given beacon.

Determining whether the further bi-modal railway vehicle is faulty may include ascertaining that the further bi-modal railway vehicle passed the given beacon and did not transmit to the server the beacon signal for the given beacon, and that the given bi-modal railway vehicle did transmit to the server the beacon signal for the given beacon.

In a second aspect, embodiments of the invention provide a server as set out in claim 9.

Determining that the bi-modal railway vehicle is faulty may include ascertaining from the location signal whether the bi-modal railway vehicle has passed a beacon and, if so, verifying that no beacon signal was received from the passed beacon. Ascertaining from the location signal whether the bi-modal railway vehicle has passed a beacon may include referencing a database containing the trackside locations of the one or more beacons.

Determining that the bi-modal railway vehicle is faulty includes incrementing, when it has been verified that no beacon signal was received from the passed beacon, a train error counter stored on the server, and determining that the given bi-modal railway vehicle is faulty when the train error counter for that given bi-modal railway vehicle is higher than a train error threshold. The value of the train error threshold may be configurable.

Determining that the bi-modal railway vehicle is faulty may include verifying that a beacon signal from the passed beacon was received by a further bi-modal railway vehicle within a threshold time. The threshold time may be, for example, 24 hours. The threshold time may be configurable.

Determining that the bi-modal railway vehicle is faulty may include ascertaining from the location signal whether the bi-modal railway vehicle has passed a plurality of beacons, and verifying that no beacon signals have been received from the plurality of beacons. Determining that the bi-modal railway vehicle is faulty may further include verifying that the beacon signals have been received from the passed beacons by a further bi-modal railway vehicle within a threshold time. The threshold time may be, for example, 24 hours. The threshold time may be configurable.

Determining that the given beacon is faulty may include verifying that no beacon signal was received from the given beacon as the given bi-modal railway vehicle passed it and ascertaining that the given railway vehicle received a beacon signal from one or more other beacons within a threshold time or travel distance. The threshold time or travel distance may be configurable.

Determining that the given beacon is faulty includes verifying that no beacon signal was received from the given beacon as the given bi-modal railway vehicle passed the give beacon and ascertaining, from a further location signal indicating the location of another bi-modal railway vehicle, that the other bi-modal railway vehicle also did not receive the beacon signal from the given beacon as the other bi-modal railway vehicle passed the given beacon. Each bi-modal railway vehicle which passes the given beacon without receiving the beacon signal causes a beacon error counter stored in the server to be incremented, and the given beacon may be determined as faulty when the beacon error counter exceeds a beacon error threshold. The beacon error threshold may be configurable.

When it is determined that one of the given beacon or given bi-modal railway vehicle is faulty, the machine executable instructions may cause the server to send an alert to at least the given bi-modal railway vehicle.

When it is determined that the given beacon is faulty, the machine executable instructions may cause the server to identify from a database of scheduled trains a list of bi-modal railway vehicles due to pass by the faulty beacon, and to send an alert to all bi-modal railway vehicles on the list of bi-modal railway vehicles.

Determining that the given beacon is faulty may include comparing an identifier of the beacon to a list of beacons scheduled to be out of utilization, and not determining that the beacon is faulty if the list of beacons scheduled to be out of utilization includes the given beacon.

Determining whether the further bi-modal railway vehicle is faulty may include ascertaining that the further bi-modal railway vehicle passed the given beacon and did not transmit to the server the beacon signal for the given beacon, and that the given bi-modal railway vehicle did transmit to the server the beacon signal for the given beacon.

In disclosure not forming a part of the present invention, there is provided discussion of a bi-modal railway vehicle, the bi-modal railway vehicle comprising:
an antenna, for communicating with one or more beacons located at respective trackside points and configured to broadcast a beacon signal indicating a transition from an electrified section of the railway network to a non-electrified section of the railway network or vice versa;
a control unit, configured in an automated mode to transition the bi-modal railway vehicle from a first power source to a second power source in response to the antenna receiving the beacon signal;
a driver alert unit; and
a receiver, operable to receive an alert signal from a server indicative of either a beacon on the path of the bi-modal railway vehicle or the antenna of the bi-modal railway vehicle being faulty;
wherein the control unit is configured, in response to receiving the alert signal, to alert the driver via the driver alert unit that the bi-modal train should transition from the automated mode to a manual mode.

Advantageously, the control unit can inform the driver of a fault with either the bi-modal railway vehicle or one or more beacons in the vehicle's path in a timely manner.

The control unit may be configured to transition from the automated mode to the manual mode in response to receiving the alert signal, and to alert the driver to this via the driver alert unit.

The driver alert unit may be a display, speaker, or other output device.

The railway vehicle may further comprise a transmitter, and the control unit may be configured to transmit, via the transmitter, a location signal indicating the location of the bi-modal railway vehicle in the railway network to the server. The control unit may be configured to transmit this location signal periodically, e.g. every 10 minutes, 15 minutes, 30 minutes, 60, 90 minutes, or 120 minutes. The time between transmissions may be configurable. The control unit may be configured to transmit this location in real time.

The railway vehicle may further comprise a transmitter, and the control unit may be configured to transmit, via the transmitter, a beacon signal received by the antenna from a given beacon of the one or more beacons to the server.

The control unit may be a processor.

In a third aspect, embodiments of the invention provide a method for monitoring a railway network as set out in claim 12.

Determining that the bi-modal railway vehicle is faulty may include ascertaining from the location signal whether the bi-modal railway vehicle has passed a beacon and, if so, verifying that no beacon signal was received from the passed beacon. Ascertaining from the location signal whether the bi-modal railway vehicle has passed a beacon may include referencing a database containing the trackside locations of the one or more beacons.

Determining that the bi-modal railway vehicle is faulty includes incrementing, when it has been verified that no beacon signal was received from the passed beacon, a train error counter stored on the server, and determining that the given bi-modal railway vehicle is faulty when the train error counter for that given bi-modal railway vehicle is higher than a train error threshold. The value of the train error threshold may be configurable.

Determining that the bi-modal railway vehicle is faulty may include verifying that a beacon signal from the passed beacon was received by a further bi-modal railway vehicle within a threshold time. The threshold time may be, for example, 24 hours. The threshold time may be configurable.

Determining that the bi-modal railway vehicle is faulty may include ascertaining from the location signal whether the bi-modal railway vehicle has passed a plurality of beacons, and verifying that no beacon signals have been received from the plurality of beacons. Determining that the bi-modal railway vehicle is faulty may further include verifying that the beacon signals have been received from the passed beacons by a further bi-modal railway vehicle within a threshold time. The threshold time may be, for example, 24 hours. The threshold time may be configurable.

Determining that the given beacon is faulty may include verifying that no beacon signal was received from the given beacon as the given bi-modal railway vehicle passed it and ascertaining that the given railway vehicle received a beacon signal from one or more other beacons within a threshold time or travel distance. The threshold time or travel distance may be configurable.

Determining that the given beacon is faulty includes verifying that no beacon signal was received from the given beacon as the given bi-modal railway vehicle passed the give beacon and ascertaining, from a further location signal indicating the location of another bi-modal railway vehicle, that the other bi-modal railway vehicle also did not receive the beacon signal from the given beacon as the other bi-modal railway vehicle passed the given beacon. Each bi-modal railway vehicle which passes the given beacon without receiving the beacon signal causes a beacon error counter stored in the server to be incremented, and the given beacon may be determined as faulty when the beacon error counter exceeds a beacon error threshold. The beacon error threshold may be configurable.

When it is determined that one of the given beacon or given bi-modal railway vehicle is faulty, the method may include sending an alert to at least the given bi-modal railway vehicle.

When it is determined that the given beacon is faulty, the method may include identifying from a database of scheduled trains a list of bi-modal railway vehicles due to pass by the faulty beacon, and to send an alert to all bi-modal railway vehicles on the list of bi-modal railway vehicles.

Determining that the given beacon is faulty may include comparing an identifier of the beacon to a list of beacons scheduled to be out of utilization, and not determining that the beacon is faulty if the list of beacons scheduled to be out of utilization includes the given beacon.

Determining whether the further bi-modal railway vehicle is faulty may include ascertaining that the further bi-modal railway vehicle passed the given beacon and did not transmit to the server the beacon signal for the given beacon, and that the given bi-modal railway vehicle did transmit to the server the beacon signal for the given beacon.

In disclosure not forming a part of the invention there is provided discussion of a server, connectable to one or more bi-modal railway vehicles operating on a railway network, the bi-modal railway vehicles being configured to operate both on electrified and non-electrified sections of the railway network and to receive a beacon signal from one or more beacons located at respective trackside points, the server containing one or more processors and memory, the memory containing machine executable instructions which when run on the processor, cause the processor to:
receive instructions setting a utilization status of one or more beacons in the railway network to deactivated;
identify from a database of scheduled trains, a list of bi-modal railway vehicles due to pass by the or each deactivated beacon; and
send an alert to all bi-modal railway vehicles on the list of bi-modal railway vehicles indicating the utilization status of the or each deactivated beacon.

Advantageously, the server can ensure that the bi-modal railway vehicles can safely navigate the railway network.

In disclosure not forming a part of the invention, there is provided discussion of a server, connectable to a plurality of bi-modal railway vehicles operating on a railway network, the or each bi-modal railway vehicle being configured to operate both on electrified and non-electrified sections of the railway network and to receive a beacon signal from one or more beacons located at respective trackside points, the server containing one or more processors and memory, the memory containing machine executable instructions which, when run on the processor, cause the processor to:
receive, from each of the plurality of bi-modal railway vehicles, a beacon signal corresponding to a given beacon of the one or more beacons, together with location data indicating the location of the respective bi-modal railway vehicle when it received the beacon signal;
compare an identifier of the given beacon to a list of known beacons; and
add the identifier of the given beacon to the list of known beacons when the comparison finds that the given beacon is not within the list of known beacons.

The invention includes the combination of the aspects and preferred features described except where such a combination is clearly impermissible or expressly avoided.

Further aspects of the present invention provide: a computer program comprising code which, when run on a computer, causes the computer to perform the method of the third aspect; a computer readable medium storing a computer program comprising code which, when run on a computer, causes the computer to perform the method of the third aspect; and a computer system programmed to perform the method of the third aspect.

### Brief Description of the Drawings

Embodiments of the invention will now be described by way of example with reference to the accompanying drawings in which:
Figure 1 shows a bi-modal railway vehicle according to an embodiment of the present invention;
Figure 2 shows a monitoring system for a railway network according to an embodiment of the present invention;
Figure 3 shows a server according to an embodiment of the present invention;
Figures 4A and 4B show alternative flow diagrams according to embodiments of the present invention; and
Figure 5 is a flow diagram illustrating a method performed on a server according to an embodiment of the present invention.

### Detailed Description and Further Optional Features

Aspects and embodiments of the present invention will now be discussed with reference to the accompanying figures. Further aspects and embodiments will be apparent to those skilled in the art.

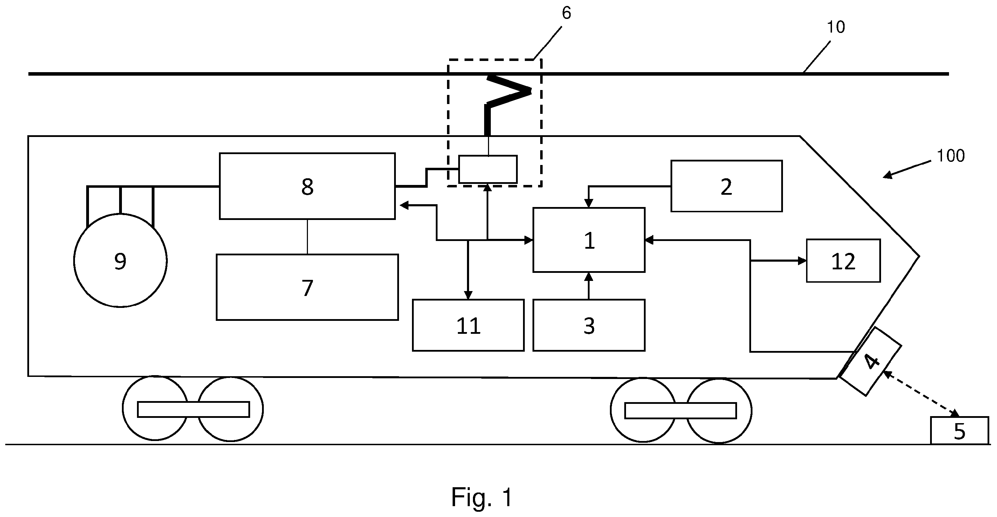

Figure 1 shows a bi-modal railway vehicle 100 according to an embodiment of the present invention. The vehicle 100 includes a control unit 1 connected to a location monitor 2 (in this example a GPS unit), an antenna 4, a transmitter and receiver 11, a pantograph control unit, a power converter, and a driver alert unit 12. The location monitor 2 periodically identifies the location of the vehicle 100 on the railway network, and reports this to the control unit 1. The control unit then utilizes transmitter and receiver 11 (in this example, a cellular modem) to transmit this location information as a location signal to a remote server. In some examples, the 100 vehicle includes a beacon database 3 which contains predefined location data of one or more beacons 5 located at respective trackside points, and the control unit 1 may use this to define areas where beacons are expected to be installed (and so warn the driver if they are not detected) and/or to determine whether the vehicle should transition from one source of power to another. Table 1 below is an illustrative example of the contents of beacon database 3. Antenna 4 is configured to communicate with the one or more beacons 5, and relay to the control unit 1 when it has received a signal from any given beacon.

**Table 1**

| Route ID | Route | Beacon location (latitude/longitude coordinates) | Allocated beacon ID | Pattern of change over |
|---|---|---|---|---|
| 1 | Station A to Station B | From (29800-500) to (29800+500) | AAA1~AAA8 | Electrical to self-powering |
| | | From (51000-500) to (51000+500) | BBB1~BBB10 | Self-powering to electrical |

The bi-modal railway vehicle 100 also includes an overhead power collector 6, which comprises the pantograph control unit and a pantograph. Therefore, when the vehicle is operating in an electrified section of the railway network the pantograph is extended to contact overhead line 10 and draw power for motors 9 (e.g. traction motors) and other on board components. When the vehicle is operating in a non-electrified section of the railway network, it utilises on board power source 7. The on board power source in this example is a generator unit (i.e. generator and combustion engine set), but may alternatively be a battery, fuel cell, or other self-contained power source). In both instances, power is provided to a power converter 8 for provision to the traction motors 9.

In use, and when neither vehicle 100 nor beacon 5 are faulty, antenna 4 receives a beacon signal from a given beacon 5 located on a trackside point. This beacon signal is communicated to the control unit 1, and indicates that the control unit 1 should cause a transition from one power source to another. For example, if the beacon indicates that the vehicle is about to leave the electrified section of the railway network, it will indicate that the vehicle should transition from using the overhead power collector 6 to instead using the on board power source 7 (or vice versa). This transition may be automated, when the control unit 1 is in an automated mode. Alternatively, the transition may be manual (i.e. performed by the driver) when the control unit 1 is in a manual mode.

In response to receiving an alert signal from the remote server via transmitter and receiver 11, the control unit 1 is configured to alert the driver via driver alert unit 12. In this example, the driver alert unit 12 is a display configured to show a visual alert to the driver. But it may be a speaker or other output unit, or combinations thereof.

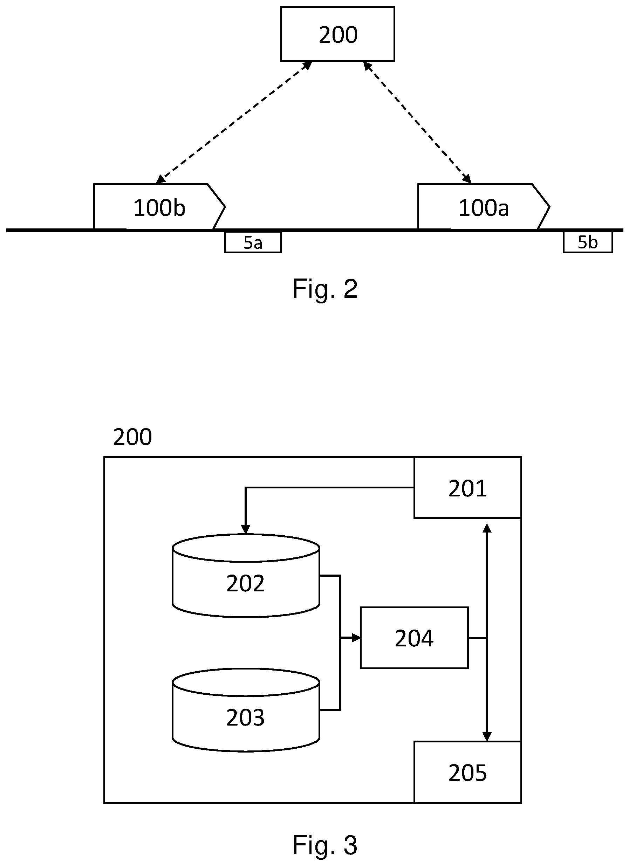

Figure 2 shows a monitoring system for a railway network according to an embodiment of the present invention. The system includes a server 200 connected to a plurality of bi-modal railway vehicles 100a, 100b. A plurality of beacons 5a, 5b are located at trackside points. In use, the server 200 is configured to receive from a given bi-modal railway vehicle one or more of: a beacon signal, received from a beacon by the antenna 4 of the railway vehicle, and a location signal, indicating the location of the given bi-modal railway vehicle in the railway network. The server is then configured, in manner discussed in detail below, to determine from the received signal(s) whether the beacon, the given bi-modal railway vehicle, or a further bi-modal railway vehicle is faulty.

Figure 3 shows a server 200 according to an embodiment of the present invention. The server includes a vehicle communication interface 201 which is connectable to each bi-modal railway vehicle, a report database 202 for reports from the bi-modal vehicles, a route database 203 for an geographical location data of beacons, a calculation unit 204, and an operator communication interface to an operator 205 (e.g. display, or local network card). In use, the vehicle communication interface 201 receives from each bi-modal railway vehicle 100 reports containing the location of the respective vehicle, and a beacon ID if received. These are stored in report database 202. A first example of the contents of the report database is shown in Table 2 below, and an example of the contents of the route database is shown in Table 3. In one example, the server 200 uses repeated reports from units of a new beacon being detected by multiple units in the same geographical position to infer the installation of a new beacon. The new beacon is then added to the route database.

**Table 2**

| Report ID | Train ID | Position | Beacon ID | Route ID |
|---|---|---|---|---|
| 1 | 100a | X1,Y1 | Nothing | AB |
| 2 | 100a | X2,Y2 | Nothing | AB |
| 3 | 100a | X3,Y3 | Nothing | AB |
| ... | ... | ... | ... | ... |
| N | 100a | W1,Z1 | B1 | CD |
| N+1 | 100a | W2,Z2 | B1 | CD |
| ... | ... | ... | ... | ... |
| M | 100b | X1,Y1 | Nothing | AB |
| M+1 | 100b | X2,Y2 | Nothing | AB |
| M+2 | 100b | X3,Y3 | Nothing | AB |
| ... | ... | ... | ... | ... |
| P | 100b | W1,Z1 | B1 | AB |
| P+1 | 100b | W2,Z2 | B1 | AB |
| P+2 | 100b | W3,Z3 | Nothing | AB |
| ... | ... | ... | ... | ... |

**Table 3**

| Route ID | Beacon distribution data | Beacon ID |
|---|---|---|
| AB | (X1, Y1) to (X2, Y2) | A1 |
| CD | (W1, Z1) to (W2, Z2) | B1 |
| ... | ... | ... |

The calculation unit 204 determines, from the report database 202 whether one of a given bi-modal railway vehicle or a beacon is faulty. Using the example in Table 2, the calculation unit 204 determines that beacon A1, located along route AB is faulty. It does so by identifying that whilst vehicle with train ID 100a did not communicate with the expected beacon, neither did vehicle with train ID 100b. Furthermore, both vehicles communicated with beacon B1. Therefore it can be determined that the antennae on both vehicles 100a and 100b is not faulty, and therefore the fault must be with beacon A1.

Table 4 shows a further example of the contents of report database 202:

**Table 4**

| Report ID | Train ID | Position | Beacon ID | Route ID |
|---|---|---|---|---|
| 1 | 100a | X1,Y1 | Nothing | AB |
| 2 | 100a | X2,Y2 | Nothing | AB |
| 3 | 100a | X3,Y3 | Nothing | AB |
| ... | ... | ... | ... | ... |
| N | 100a | W1,Z1 | Nothing | CD |
| N+1 | 100a | W2,Z2 | Nothing | CD |
| ... | ... | ... | ... | ... |
| M | 100b | X1,Y1 | Nothing | AB |
| M+1 | 100b | X2,Y2 | A1 | AB |
| M+2 | 100b | X3,Y3 | A1 | AB |
| ... | ... | ... | ... | ... |
| P | 100b | W1,Z1 | B1 | AB |
| P+1 | 100b | W2,Z2 | B1 | AB |
| P+2 | 100b | W3,Z3 | Nothing | AB |
| ... | ... | ... | ... | ... |

In this example, the calculation unit 204 determines that vehicle 100a is faulty. It does so by identifying that vehicle with train ID 100a did not communicate with either beacon A1 or B1 located along routes AB and CD respectively. Whereas, train 100b did communicate with beacons A1 and B1. Therefore it can be determined that the antennae on vehicle 100a is faulty, as neither beacon can be determined as faulty.

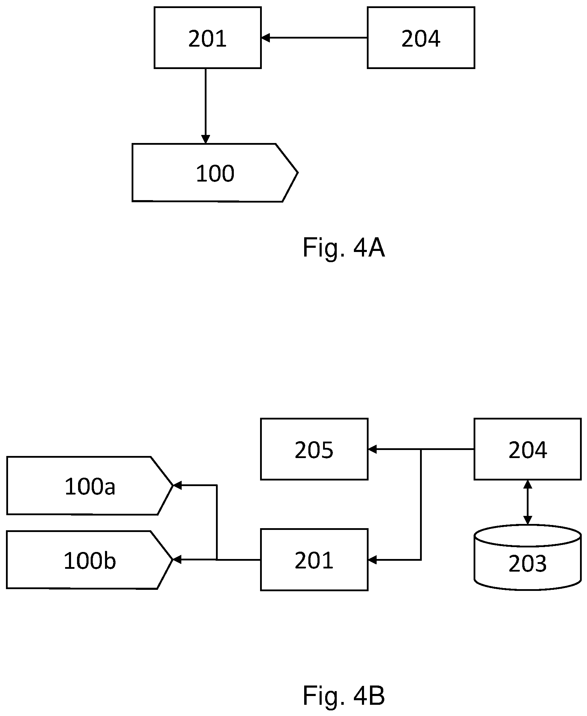

Figures 4A and 4B show alternative flow diagrams according to embodiments of the present invention. In Figure 4A, the calculation unit 204 determines that the antenna of vehicle 100 is faulty and sends, via vehicle communication interface 201 an alert to the vehicle 100 an alert indicating that it should transition from an automated mode to a manual mode. In Figure 4B, the calculation unit 204 determines that a given beacon is faulty. It then ascertains, from route database 203, which bi-modal railway vehicles will be passing the faulty beacon.

Having ascertained these it transmits, via vehicle communication interface 201, an alert to each vehicle 100a, 100b identified. In addition, an alert is sent via operator communication interface 205 to an operator indicating that maintenance should be performed on the beacon. Clearly, with reference to Figure 4A, a similar alert could be trigged via operator communication interface 205 to an operating indicating that the bi-modal railway vehicle 100 with a faulty antenna should have maintenance performed.

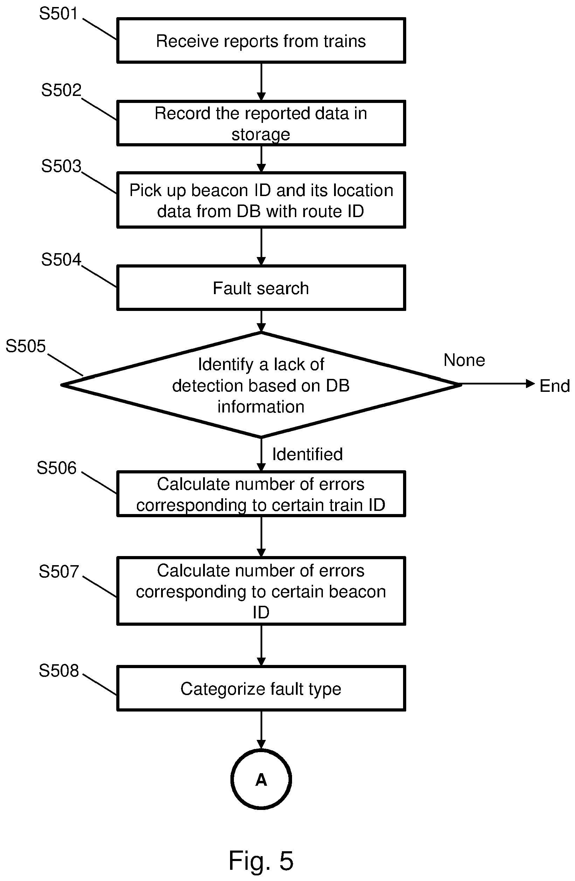

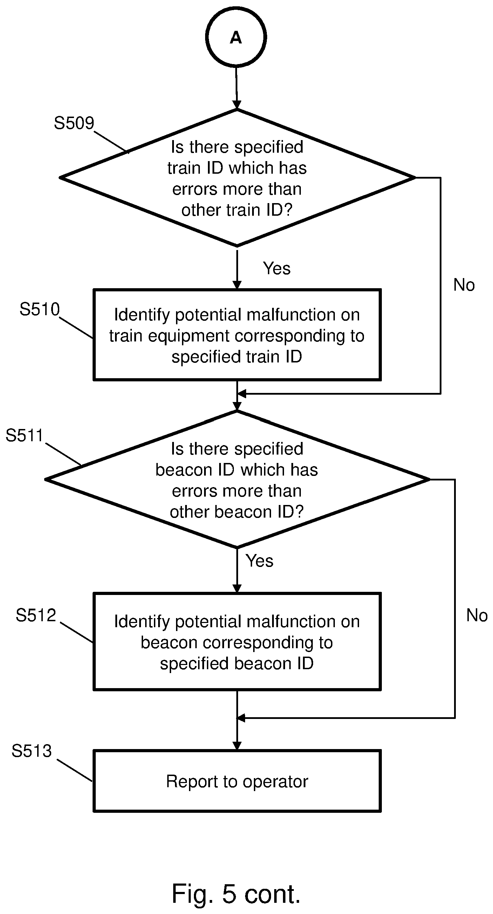

Figure 5 is a flow diagram illustrating a method performed on a server according to an embodiment of the present invention. In a first step, S501, the server receives one or more reports from one or more bi-modal railway vehicles. Next, in step S502, it stores these report(s) in the report database 202. The method then moves to step S503, where the server retrieves at least some of the contents of beacon database 3. In this example, the server retrieves the beacon ID, location data, and route ID for a number of beacons. It is at this step, in some examples, that the server would enter a new beacon into the route database if a number of vehicles detect a new beacon in the same geographical location.

In step S504, the server enters a fault search routine using the reports from the trains and, optionally, the data from the beacon database 3. The fault search routine, comprising steps S505 - S512, utilises the processes described above with respect ascertaining whether one or both of a given beacon and a given bi-modal railway vehicle is faulty.

Next, in step S505, the server identifies if at least one fault has been found. If no fault has been found, 'None', the method ends. If a fault has been found, 'Identified', the method moves to step S506 where a number of errors corresponding to a certain train ID is calculated (e.g. a train error counter). Next, in step S507, a number of errors corresponding to a certain beacon ID is calculated (e.g. a beacon error counter).

The method then moves to step S508, where the fault type is categorized. Next, in step S509, the server determines if a specific train ID has more errors than a threshold (in this example, the threshold is the number of errors associated with another train ID). If so, 'Yes', the method moves to step S510 and the specific train is identified as possibly having a malfunction (e.g. the antenna may be faulty). If not, 'No', the method moves to step 511 where it determines if a specific beacon ID has more errors than a threshold (in this example, the threshold is the number of errors associated with another beacon ID). If so, 'Yes', the method moves to step 512 and the specific beacon is identified as possibly having a malfunction (e.g. the beacon may be faulty). It should be noted that the value of the threshold may be configurable e.g. by an operator. The threshold can therefore be made more or less sensitive to a determination that one or both of the train or beacon is faulty.

In any event, the method terminates at step S513, where a report is made to the operator identifying the faulty train and/or faulty beacon.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### List of Features

- 100: Bi-modal railway vehicle
- 1: Control unit
- 2: Location monitor
- 3: Beacon database
- 4: Antenna
- 5: Beacon
- 6: Overhead power collector
- 7: On board power source
- 8: Power converter
- 9: Motor
- 10: Overhead line
- 11: Transmitter and receiver 11
- 12: Driver alert unit
- 200: Server
- 201: Vehicle communication interface
- 202: Report database
- 203: Route database
- 204: Calculation unit
- 205: Operator communication interface
- S501 - S513: Method steps

## Claims

1. A monitoring system for a railway network, the monitoring system comprising:
a first bi-modal railway vehicle and a second bi-modal railway vehicle, each configured to operate both on electrified and non-electrified sections of the railway network;
one or more beacons, located at respective trackside points, and configured to broadcast a beacon signal indicating a transition from an electrified section of the railway network to a non-electrified section of the railway network or vice versa;
a server, configured to receive from the first bi-modal railway vehicle one or both of:
the beacon signal, received by the first bi-modal railway vehicle from a given beacon; and
a location signal, indicating the location of the first bi-modal railway vehicle in the railway network;
wherein the server is further configured to determine, from the received beacon signal and/or the received location signal, which of the beacon, the first bi-modal railway vehicle, and the second bi-modal railway vehicle is faulty;
wherein determining that the first or second bi-modal railway vehicle is faulty includes incrementing, when it has been verified that no beacon signal was received from the passed beacon, a train error counter, and determining that the first or second bi-modal railway vehicle is faulty when the train error counter for the first or second bi-modal railway vehicle is higher than a train error threshold;
wherein determining that the beacon is faulty includes verifying that no beacon signal was received from the beacon as the first bi-modal railway vehicle passed the given beacon and ascertaining, from a further location signal indicating the location of the second bi-modal railway vehicle, that the second bi-modal railway vehicle also did not receive the beacon signal from the beacon as the second bi-modal railway vehicle passed the given beacon; and
wherein each bi-modal railway vehicle which passes the beacon without receiving the beacon signal causes a beacon error counter stored in the server to be incremented, and wherein the beacon is determined as faulty when the beacon error counter exceeds a beacon error threshold.

2. The monitoring system of claim 1, wherein determining that the bi-modal railway vehicle is faulty includes ascertaining from the location signal whether the bi-modal railway vehicle has passed a beacon and, if so, verifying that no beacon signal was received from the passed beacon.

3. The monitoring system of claim 2, wherein ascertaining from the location signal whether the bi-modal railway vehicle has passed a beacon includes referencing a database containing the trackside locations of the one or more beacons.

4. The monitoring system of any preceding claim, wherein determining that the bi-modal railway vehicle is faulty includes verifying that a beacon signal from the passed beacon was received by a further bi-modal railway vehicle within a threshold time.

5. The monitoring system of any preceding claim, wherein determining that the bi-modal railway vehicle is faulty includes ascertaining from the location signal whether the bi-modal railway vehicle has passed a plurality of beacons, and verifying that no beacon signals have been received from the plurality of beacons.

6. The monitoring system of claim 5, wherein determining that the bi-modal railway vehicle is faulty further includes verifying that beacon signals have been received from the passed beacons by a further bi-modal railway vehicle within a threshold time.

7. The monitoring system of any preceding claim, wherein determining that the given beacon is faulty includes verifying that no beacon signal was received from the given beacon as the given bi-modal railway vehicle passed it and ascertaining that the given railway vehicle received a beacon signal from one or more other beacons within a threshold time or travel distance;.

8. The monitoring system of any preceding claim, wherein when it is determined that one of the given beacon or given bi-modal railway vehicle is faulty, the server is configured to send an alert to at least the given bi-modal railway vehicle; and/or
wherein when it is determined that the given beacon is faulty, the server is configured to identify from a database of scheduled trains a list of bi-modal railway vehicles due to pass by the faulty beacon, and to send an alert to all bi-modal railway vehicles on the list of bi-modal railway vehicles; and/or
wherein determining that the given beacon is faulty includes comparing an identifier of the beacon to a list of beacons scheduled to be out of utilization, and not determining that the beacon is faulty if the list of beacons scheduled to be out of utilization includes the given beacon; and/or
wherein determining whether the further bi-modal railway vehicle is faulty includes ascertaining that the further bi-modal railway vehicle passed the given beacon and did not transmit to the server the beacon signal for the given beacon, and that the given bi-modal railway vehicle did transmit to the server the beacon signal for the given beacon.

9. A server, connectable to a first bi-modal railway vehicle and a second bi-modal railway vehicle, each operating on a railway network, the bi-modal railway vehicles being configured to operate both on electrified and non-electrified sections of the railway network and to receive a beacon signal from one or more beacons located at respective trackside points the or each beacon being configured to broadcast a respective beacon signal indicating a transition from an electrified section of the railway network to a non-electrified section of the railway network or vice versa, the server containing one or more processors and memory, the memory containing machine executable instructions which when run on the processor cause the processor to:
determine, in response to receiving one or more of:
a beacon signal, received by the first bi-modal railway vehicle from a given beacon and transmitted to the server; and
a location signal, indicating the location of the first bi-modal railway vehicle in the railway network and received from the first bi-modal railway vehicle,
which of the given beacon, the first bi-modal railway vehicle, and the second bi-modal railway vehicle is faulty;
wherein determining that the first or second bi-modal railway vehicle is faulty includes incrementing, when it has been verified that no beacon signal was received from the passed beacon, a train error counter, and determining that the first or second bi-modal railway vehicle is faulty when the train error counter for the first or second bi-modal railway vehicle is higher than a train error threshold;
wherein determining that the beacon is faulty includes verifying that no beacon signal was received from the beacon as the first bi-modal railway vehicle passed the given beacon and ascertaining, from a further location signal indicating the location of the second bi-modal railway vehicle, that the second bi-modal railway vehicle also did not receive the beacon signal from the beacon as the second bi-modal railway vehicle passed the given beacon; and
wherein each bi-modal railway vehicle which passes the beacon without receiving the beacon signal causes a beacon error counter stored in the server to be incremented, and wherein the beacon is determined as faulty when the beacon error counter exceeds a beacon error threshold.

10. The server of claim 9, wherein the memory further contains machine executable instructions which when run on the processor cause the processor to:
receive instructions setting a utilization status of one or more beacons in the railway network to deactivated;
identify from a database of scheduled trains, a list of bi-modal railway vehicles due to pass by the or each deactivated beacon; and
send an alert to all bi-modal railway vehicles on the list of bi-modal railway vehicles indicating the utilization status of the or each deactivated beacon.

11. The server of claim 9, wherein the memory further contains machine executable instructions which when run on the processor cause the processor to:
receive, from each of the plurality of bi-modal railway vehicles, a beacon signal corresponding to a given beacon of the one or more beacons, together with location data indicating the location of the respective bi-modal railway vehicle when it received the beacon signal;
compare an identifier of the given beacon to a list of known beacons; and
add the identifier of the given beacon to the list of known beacons when the comparison finds that the given beacon is not within the list of known beacons.

12. A method for monitoring a railway network, the railway network including:
a first bi-modal railway vehicle and a second bi-modal railway vehicle, each configured to operate both on electrified and non-electrified sections of the railway network;
one or more beacons, located at respective trackside locations, which broadcast a beacon signal indicating a transition from an electrified section of the railway network to a non-electrified section of the railway network or vice versa; and
a server, connected to the first and second bi-modal railway vehicles;
wherein the method includes:
receiving, at the server and from the first bi-modal railway vehicle, one or more of:
the beacon signal, received by the first bi-modal railway vehicle from a given one of the beacons; and
a location signal, indicating the location of the first bi-modal railway vehicle in the railway network; and
determining, from the beacon signal and/or the location signal, which of: the given beacon, first bi-modal railway vehicle, and the second bi-modal railway vehicle is faulty;
wherein determining that the first or second bi-modal railway vehicle is faulty includes incrementing, when it has been verified that no beacon signal was received from the passed beacon, a train error counter, and determining that the first or second bi-modal railway vehicle is faulty when the train error counter for the first or second bi-modal railway vehicle is higher than a train error threshold;
wherein determining that the beacon is faulty includes verifying that no beacon signal was received from the beacon as the first bi-modal railway vehicle passed the given beacon and ascertaining, from a further location signal indicating the location of the second bi-modal railway vehicle, that the second bi-modal railway vehicle also did not receive the beacon signal from the beacon as the second bi-modal railway vehicle passed the given beacon; and
wherein each bi-modal railway vehicle which passes the beacon without receiving the beacon signal causes a beacon error counter stored in the server to be incremented, and wherein the beacon is determined as faulty when the beacon error counter exceeds a beacon error threshold.

## Patentansprüche

1. Überwachungssystem für ein Eisenbahnnetz, wobei das Überwachungssystem Folgendes umfasst:
ein erstes bimodales Schienenfahrzeug und ein zweites bimodales Schienenfahrzeug, die jeweils dazu ausgelegt sind, sowohl auf elektrifizierten als auch auf nicht elektrifizierten Abschnitten des Eisenbahnnetzes betrieben zu werden;
einen oder mehrere Baken, die an entsprechenden schienenseitigen Punkten angeordnet und dazu ausgelegt sind, ein Bakensignal, das einen Übergang von einem elektrifizierten Abschnitt des Eisenbahnnetzes zu einem nicht elektrifizierten Abschnitt des Eisenbahnnetzes oder umgekehrt anzeigt, zu senden;
einen Server, der konfiguriert ist, um von dem ersten bimodalen Schienenfahrzeug eines oder beides aus folgenden zu empfangen:
das Bakensignal, das durch das erste bimodale Eisenbahnfahrzeug von einem gegebenen Baken empfangen wird; und
ein Positionssignal, das die Position des ersten bimodalen Schienenfahrzeugs auf dem Eisenbahnnetz angibt;
wobei der Server ferner konfiguriert ist, um anhand des empfangenen Bakensignals und/oder des empfangenen Positionssignals zu bestimmen, welches aus dem Baken, dem ersten bimodalen Eisenbahnfahrzeug und dem zweiten bimodalen Schienenfahrzeug fehlerhaft ist;
wobei das Bestimmen, dass das erste oder das zweite bimodale Schienenfahrzeug fehlerhaft ist, das Erhöhen einer Zugfehlerzahl, wenn verifiziert wurde, dass kein Bakensignal von dem passierten Baken empfangen wurde, und das Bestimmen, dass das erste oder das zweite bimodale Schienenfahrzeug fehlerhaft ist, wenn die Zugfehlerzahl für das erste oder das zweite bimodale Schienenfahrzeug einen Zugfehlerschwellwert übersteigt, umfasst;
wobei das Bestimmen, dass der Baken fehlerhaft ist, das Verifizieren, dass von dem Baken kein Bakensignal empfangen wurde, während das erste bimodale Schienenfahrzeug den gegebenen Baken passiert hat, und das Überprüfen anhand eines weiteren Positionssignals, welches die Position des zweiten bimodalen Schienenfahrzeugs angibt, dass das zweite bimodale Schienenfahrzeug auch kein Bakensignal von dem Baken empfangen hat, während das zweite bimodale Schienenfahrzeug den gegebenen Baken passiert hat, umfasst; und
wobei jedes bimodale Schienenfahrzeug, welches den Baken passiert, ohne das Bakensignal zu empfangen, das Erhöhen einer in dem Server gespeicherten Bakenfehlerzahl bewirkt, und wobei bestimmt wird, dass der Baken fehlerhaft ist, wenn die Bakenfehlerzahl einen Bakenfehlerschwellwert übersteigt.

2. Überwachungssystem nach Anspruch 1, wobei das Bestimmen, dass das bimodale Schienenfahrzeug fehlerhaft ist, das Überprüfen, ob das bimodale Schienenfahrzeug einen Baken passiert hat, anhand des Positionssignals und, falls dies zutrifft, das Verifizieren, dass kein Bakensignal von dem passierten Baken empfangen wurde, umfasst.

3. Überwachungssystem nach Anspruch 2, wobei das Überprüfen, ob das bimodale Schienenfahrzeug einen Baken passiert hat, anhand des Positionssignals das Verweisen auf eine Datenbank, welche die schienenseitigen Positionen des einen oder der mehreren Baken enthält, umfasst.

4. Überwachungssystem nach einem der vorangegangenen Ansprüche, wobei das Bestimmen, dass das bimodale Schienenfahrzeug fehlerhaft ist, das Verifizieren, dass ein Bakensignal von dem passierten Baken innerhalb einer Schwellwertzeit durch ein weiteres bimodales Schienenfahrzeug empfangen wurde, umfasst.

5. Überwachungssystem nach einem der vorangegangenen Ansprüche, wobei das Bestimmen, dass das bimodale Schienenfahrzeug fehlerhaft ist, das Überprüfen anhand des Positionssignals, ob das bimodale Schienenfahrzeug eine Vielzahl von Baken passiert hat, und das Verifizieren, dass keine Bakensignale von der Vielzahl von Baken empfangen wurden, umfasst.

6. Überwachungssystem nach Anspruch 5, wobei das Bestimmen, dass das bimodale Schienenfahrzeug fehlerhaft ist, ferner das Verifizieren, dass Bakensignale von den passierten Baken innerhalb einer Schwellenzeit durch ein weiteres bimodales Schienenfahrzeug empfangen wurden, umfasst.

7. Überwachungssystem nach einem der vorangegangenen Ansprüche, wobei das Bestimmen, dass der gegebene Baken fehlerhaft ist, das Verifizieren, dass kein Bakensignal von dem gegebenen Baken empfangen wurde, während das gegebene bimodale Schienenfahrzeug ihn passiert hat, und das Überprüfen, ob das gegebene Schienenfahrzeug ein Bakensignal von einem oder mehreren anderen Baken innerhalb einer Schwellwertzeit oder einer Fahrstrecke empfangen hat, umfasst.

8. Überwachungssystem nach einem der vorangegangenen Ansprüche, wobei, wenn bestimmt wird, dass eines aus dem gegebenen Baken oder dem gegebenen bimodalen Schienenfahrzeug fehlerhaft ist, der Server konfiguriert ist, um eine Warnung an zumindest das gegebene bimodale Schienenfahrzeug zu senden; und/oder
wobei, wenn bestimmt wird, dass der gegebene Baken fehlerhaft ist, der Server konfiguriert ist, um anhand einer Datenbank von geplanten Zügen eine Liste von bimodalen Schienenfahrzeugen, deren Passieren des fehlerhaften Bakens bevorsteht, zu identifizieren und eine Warnung an alle bimodalen Schienenfahrzeuge auf der Liste von bimodalen Schienenfahrzeugen zu senden; und/oder
wobei das Bestimmen, dass der gegebene Baken fehlerhaft ist, das Vergleichen eines Identifikators des Bakens mit einer Liste von Baken, die geplanterweise außer Betrieb sind, und das Nichtbestimmen, dass der Baken fehlerhaft ist, wenn die Liste von Baken, die geplanterweise außer Betrieb sind, den gegebenen Baken umfasst, umfasst; und/oder
wobei das Bestimmen, ob das weitere bimodale Schienenfahrzeug fehlerhaft ist, das Überprüfen, ob das weitere bimodale Schienenfahrzeug den gegebenen Baken passiert hat und das Bakensignal für den gegebenen Baken nicht an den Server gesendet hat, und ob das gegebene bimodale Schienenfahrzeug das Bakensignal für den gegebenen Baken gesendet hat, umfasst.

9. Server, der verbindbar mit einem ersten bimodalen Schienenfahrzeug und einem zweiten bimodalen Schienenfahrzeug ist, die jeweils auf einem Eisenbahnnetzwerk betrieben werden, wobei die bimodalen Schienenfahrzeuge dazu ausgelegt sind, dazu ausgelegt sind, sowohl auf elektrifizierten als auch auf nicht elektrifizierten Abschnitten des Eisenbahnnetzes betrieben zu werden und ein Bakensignal von einem oder mehreren Baken zu empfangen, die an entsprechenden schienenseitigen Punkten angeordnet sind, wobei der oder jeder Baken dazu ausgelegt ist, ein entsprechendes Bakensignal, das einen Übergang von einem elektrifizierten Abschnitt des Eisenbahnnetzes zu einem nicht elektrifizierten Abschnitt des Eisenbahnnetzes oder umgekehrt angibt, zu senden, wobei der Server einen oder mehrere Prozessoren und einen Speicher enthält, wobei der Speicher durch eine Maschine ausführbare Befehle enthält, die, wenn sie auf dem Prozessor laufen, bewirken, dass der Prozessor Folgendes ausführt:
als Antwort auf das Empfangen von einem oder mehreren aus:
einem Bakensignal, das durch das erste bimodale Eisenbahnfahrzeug von einem gegebenen Baken empfangen und an den Server gesendet wird; und
einem Positionssignal, das die Position des ersten bimodalen Schienenfahrzeugs auf dem Eisenbahnnetz angibt und von dem ersten bimodalen Schienenfahrzeug empfangen wird,
Bestimmen, welches aus dem Baken, dem ersten bimodalen Eisenbahnfahrzeug und dem zweiten bimodalen Schienenfahrzeug fehlerhaft ist;
wobei das Bestimmen, dass das erste oder das zweite bimodale Schienenfahrzeug fehlerhaft ist, das Erhöhen einer Zugfehlerzahl, wenn verifiziert wurde, dass kein Bakensignal von dem passierten Baken empfangen wurde, und das Bestimmen, dass das erste oder das zweite bimodale Schienenfahrzeug fehlerhaft ist, wenn die Zugfehlerzahl für das erste oder das zweite bimodale Schienenfahrzeug eine Zugfehlerschwelle übersteigt, umfasst;
wobei das Bestimmen, dass der Baken fehlerhaft ist, das Verifizieren, dass von dem Baken kein Bakensignal empfangen wurde, wenn das erste bimodale Schienenfahrzeug den gegebenen Baken passiert hat, und das Überprüfen anhand eines weiteren Positionssignals, welches die Position des zweiten bimodalen Schienenfahrzeugs angibt, dass das zweite bimodale Schienenfahrzeug auch kein Bakensignal von dem Baken empfangen hat, als das zweite bimodale Schienenfahrzeug den gegebenen Baken passiert hat, umfasst; und
wobei jedes bimodale Schienenfahrzeug, welches den Baken passiert, ohne das Bakensignal zu empfangen, das Erhöhen einer in dem Server gespeicherten Bakenfehlerzahl bewirkt, und wobei bestimmt wird, dass der Baken fehlerhaft ist, wenn die Bakenfehlerzahl einen Bakenfehlerschwellwert übersteigt.

10. Server nach Anspruch 9, wobei der Speicher ferner durch eine Maschine ausführbare Befehle enthält, die, wenn sie auf dem Prozessor laufen, bewirken, dass der Prozessor Folgendes ausführt:
Empfangen von Befehlen zum Einstellen eines Betriebsstatus von einem oder mehreren Baken auf dem Eisenbahnnetz auf deaktiviert;
Identifizieren, anhand einer Datenbank von geplanten Zügen, einer Liste von bimodalen Schienenfahrzeugen, deren Passieren des oder jedes deaktivierten Bakens bevorsteht; und
Senden einer Warnung an alle bimodalen Schienenfahrzeuge auf der Liste von bimodalen Schienenfahrzeugen, die den Betriebsstatus des oder jedes deaktivierten Bakens angibt.

11. Server nach Anspruch 9, wobei der Speicher ferner durch eine Maschine ausführbare Befehle enthält, die, wenn sie auf dem Prozessor laufen, bewirken, dass der Prozessor Folgendes ausführt:
Empfangen, von jedem aus der Vielzahl von bimodalen Schienenfahrzeugen, eines Bakensignals, das einem gegebenen Baken aus dem einen oder den mehreren Baken entspricht, zusammen mit Positionsdaten, die die Position des entsprechenden bimodalen Schienenfahrzeugs, als es das Bakensignal empfangen hat, angeben;
Vergleichen eines Identifikators des gegebenen Bakens mit einer Liste von bekannten Baken; und
Hinzufügen des Identifikators des gegebenen Bakens zur Liste von bekannten Baken, wenn der Vergleich ergibt, dass der gegebene Baken nicht in der Liste von bekannten Baken enthalten ist.

12. Verfahren zum Überwachen eines Eisenbahnnetzes, wobei das Eisenbahnnetz Folgendes umfasst:
ein erstes bimodales Schienenfahrzeug und ein zweites bimodales Schienenfahrzeug, die jeweils dazu ausgelegt sind, sowohl auf elektrifizierten als auch auf nicht elektrifizierten Abschnitten des Eisenbahnnetzes betrieben zu werden;
einen oder mehrere Baken, die an entsprechenden schienenseitigen Punkten angeordnet sind, welche(s) ein Bakensignal, das einen Übergang von einem elektrifizierten Abschnitt des Eisenbahnnetzes zu einem nicht elektrifizierten Abschnitt des Eisenbahnnetzes oder umgekehrt angibt, sendet/senden;
einen Server, der mit dem ersten und dem zweiten bimodalen Schienenfahrzeug verbunden ist;
wobei das Verfahren Folgendes umfasst:
Empfangen, an dem Server und von dem ersten bimodalen Schienenfahrzeug, von einem oder mehreren aus folgenden:
dem Bakensignal, das durch das erste bimodale Eisenbahnfahrzeug von einem gegebenen aus den Baken empfangen wird; und
einem Positionssignal, das die Position des ersten bimodalen Schienenfahrzeugs auf dem Eisenbahnnetz angibt;
Bestimmen anhand des Bakensignals und/oder des Positionssignals, welches aus dem gegebenen Baken, dem ersten bimodalen Eisenbahnfahrzeug und dem zweiten bimodalen Schienenfahrzeug fehlerhaft ist;
wobei das Bestimmen, dass das erste oder das zweite bimodale Schienenfahrzeug fehlerhaft ist, das Erhöhen einer Zugfehlerzahl, wenn verifiziert wurde, dass kein Bakensignal von dem passierten Baken empfangen wurde, und das Bestimmen, dass das erste oder das zweite bimodale Schienenfahrzeug fehlerhaft ist, wenn die Zugfehlerzahl für das erste oder das zweite bimodale Schienenfahrzeug einen Zugfehlerschwellwert übersteigt, umfasst;
wobei das Bestimmen, dass der Baken fehlerhaft ist, das Verifizieren, dass von dem Baken kein Bakensignal empfangen wurde, als das erste bimodale Schienenfahrzeug den gegebenen Baken passiert hat, und das Überprüfen anhand eines weiteren Positionssignals, welches die Position des zweiten bimodalen Schienenfahrzeugs angibt, dass das zweite bimodale Schienenfahrzeug auch kein Bakensignal von dem Baken empfangen hat, während das zweite bimodale Schienenfahrzeug den gegebenen Baken passiert hat, umfasst; und
wobei jedes bimodale Schienenfahrzeug, welches den Baken passiert, ohne das Bakensignal zu empfangen, das Erhöhen einer in dem Server gespeicherten Bakenfehlerzahl bewirkt, und wobei bestimmt wird, dass der Baken fehlerhaft ist, wenn die Bakenfehlerzahl einen Bakenfehlerschwellwert übersteigt.

## Revendications

1. Système de surveillance pour un réseau ferroviaire, le système de surveillance comprenant :
un premier véhicule ferroviaire bimodal et un second véhicule ferroviaire bimodal, configurés chacun pour fonctionner à la fois sur des sections électrifiées et non électrifiées du réseau ferroviaire ;
une ou plusieurs balises, situées à des points en bordure de voie respectifs, et configurées pour diffuser un signal de balise indiquant une transition d'une section électrifiée du réseau ferroviaire à une section non électrifiée du réseau ferroviaire, ou vice versa ;
un serveur, configuré pour recevoir du premier véhicule ferroviaire bimodal un ou les deux parmi :
le signal de balise, reçu par le premier véhicule ferroviaire bimodal à partir d'une balise donnée ; et
un signal de localisation, indiquant la localisation du premier véhicule ferroviaire bimodal dans le réseau ferroviaire ;
dans lequel le serveur est en outre configuré pour déterminer, à partir du signal de balise reçu et/ou du signal de localisation reçu, lequel de la balise, du premier véhicule ferroviaire bimodal et du second véhicule ferroviaire bimodal est défectueux ;
dans lequel la détermination que le premier ou le second véhicule ferroviaire bimodal est défectueux inclut une incrémentation, lorsqu'il a été vérifié qu'aucun signal de balise n'a été reçu depuis la balise dépassée, d'un compteur d'erreurs de train, et une détermination que le premier ou le second véhicule ferroviaire bimodal est défectueux lorsque le compteur d'erreurs de train pour le premier ou le second véhicule ferroviaire bimodal est supérieur à un seuil d'erreurs de train ;
dans lequel la détermination que la balise est défectueuse inclut une vérification qu'aucun signal de balise n'a été reçu depuis la balise lorsque le premier véhicule ferroviaire bimodal a dépassé la balise donnée et une constatation, à partir d'un signal de localisation supplémentaire indiquant la localisation du second véhicule ferroviaire bimodal, que le second véhicule ferroviaire bimodal n'a pas non plus reçu le signal de balise depuis la balise lorsque le second véhicule ferroviaire bimodal a dépassé la balise donnée ; et
dans lequel chaque véhicule ferroviaire bimodal qui dépasse la balise sans recevoir le signal de balise provoque l'incrémentation d'un compteur d'erreurs de balise stocké dans le serveur, et dans lequel la balise est déterminée comme étant défectueuse lorsque le compteur d'erreurs de balise dépasse un seuil d'erreurs de balise.

2. Système de surveillance selon la revendication 1, dans lequel la détermination que le véhicule ferroviaire bimodal est défectueux inclut une constatation à partir du signal de localisation que le véhicule ferroviaire bimodal a dépassé ou non une balise et, si tel est le cas, une vérification qu'aucun signal de balise n'a été reçu depuis la balise dépassée.

3. Système de surveillance selon la revendication 2, dans lequel la constatation à partir du signal de localisation que le véhicule ferroviaire bimodal a dépassé ou non une balise inclut l'étape consistant à se référer à une base de données contenant les emplacements en bordure de voie des une ou plusieurs balises.

4. Système de surveillance selon l'une quelconque des revendications précédentes, dans lequel la détermination que le véhicule ferroviaire bimodal est défectueux inclut une vérification qu'un signal de balise provenant de la balise dépassée a été reçu par un autre véhicule ferroviaire bimodal dans un temps de seuil.

5. Système de surveillance selon l'une quelconque des revendications précédentes, dans lequel la détermination que le véhicule ferroviaire bimodal est défectueux inclut une constatation à partir du signal de localisation que le véhicule ferroviaire bimodal a dépassé ou non une pluralité de balises, et une vérification qu'aucun signal de balise n'a été reçu à partir de la pluralité de balises.

6. Système de surveillance selon la revendication 5, dans lequel la détermination que le véhicule ferroviaire bimodal est défectueux inclut en outre une vérification que des signaux de balise ont été reçus depuis les balises dépassées par un véhicule ferroviaire bimodal supplémentaire dans un temps de seuil.

7. Système de surveillance selon l'une quelconque des revendications précédentes, dans lequel la détermination que la balise donnée est défectueuse inclut une vérification qu'aucun signal de balise n'a été reçu depuis la balise donnée lorsque le véhicule ferroviaire bimodal donné l'a dépassée et une vérification que le véhicule ferroviaire donné a reçu un signal de balise depuis une ou plusieurs autres balises à l'intérieur d'un temps ou d'une distance de déplacement de seuil.

8. Système de surveillance selon l'une quelconque des revendications précédentes, dans lequel lorsqu'il est déterminé qu'un certain de la balise donnée ou du véhicule ferroviaire bimodal donné est défectueux, le serveur est configuré pour envoyer une alerte au moins au véhicule ferroviaire bimodal donné ; et/ou
dans lequel lorsqu'il est déterminé que la balise donnée est défectueuse, le serveur est configuré pour identifier à partir d'une base de données de trains programmés une liste de véhicules ferroviaires bimodaux devant dépasser la balise défectueuse, et pour envoyer une alerte à tous les véhicules ferroviaires bimodaux sur la liste des véhicules ferroviaires bimodaux ; et/ou
dans lequel la détermination que la balise donnée est défectueuse inclut une comparaison d'un identifiant de la balise à une liste de balises programmées pour être hors d'utilisation, et ne pas déterminer que la balise est défectueuse si la liste de balises programmées pour être hors d'utilisation inclut la balise donnée ; et/ou
dans lequel la détermination que le véhicule ferroviaire bimodal supplémentaire est ou non défectueux inclut une constatation que le véhicule ferroviaire bimodal supplémentaire a dépassé la balise donnée et n'a pas transmis au serveur le signal de balise pour la balise donnée, et que le véhicule ferroviaire bimodal donné a effectivement transmis au serveur le signal de balise pour la balise donnée.

9. Serveur, pouvant être connecté à un premier véhicule ferroviaire bimodal et à un second véhicule ferroviaire bimodal, chacun fonctionnant sur un réseau ferroviaire, les véhicules ferroviaires bimodaux étant configurés pour fonctionner à la fois sur des sections électrifiées et non électrifiées du réseau ferroviaire et pour recevoir un signal de balise depuis une ou plusieurs balises localisées à des points en bordure de voie respectifs, la ou chaque balise étant configurée pour diffuser un signal de balise respectif indiquant une transition d'une section électrifiée du réseau ferroviaire à une section non électrifiée du réseau ferroviaire, ou vice versa, le serveur contenant un ou plusieurs processeurs et une mémoire, la mémoire contenant des instructions exécutables par machine qui, lorsqu'elles sont exécutées sur le processeur, amènent le processeur à :
déterminer, en réponse à la réception d'un ou plusieurs parmi :
un signal de balise, reçu par le premier véhicule ferroviaire bimodal à partir d'une balise donnée et transmis au serveur ; et
un signal de localisation, indiquant la localisation du premier véhicule ferroviaire bimodal dans le réseau ferroviaire et reçu depuis le premier véhicule ferroviaire bimodal,
lequel de la balise donnée, du premier véhicule ferroviaire bimodal et du second véhicule ferroviaire bimodal est défectueux ;
dans lequel la détermination que le premier ou le second véhicule ferroviaire bimodal est défectueux inclut une incrémentation, lorsqu'il a été vérifié qu'aucun signal de balise n'a été reçu depuis la balise dépassée, d'un compteur d'erreurs de train, et une détermination que le premier ou le second véhicule ferroviaire bimodal est défectueux lorsque le compteur d'erreurs de train pour le premier ou le second véhicule ferroviaire bimodal est supérieur à un seuil d'erreurs de train ;
dans lequel la détermination que la balise est défectueuse inclut une vérification qu'aucun signal de balise n'a été reçu depuis la balise lorsque le premier véhicule ferroviaire bimodal a dépassé la balise donnée et une constatation, à partir d'un signal de localisation supplémentaire indiquant la localisation du second véhicule ferroviaire bimodal, que le second véhicule ferroviaire bimodal n'a pas non plus reçu le signal de balise depuis la balise lorsque le second véhicule ferroviaire bimodal a dépassé la balise donnée ; et
dans lequel chaque véhicule ferroviaire bimodal qui dépasse la balise sans recevoir le signal de balise provoque l'incrémentation d'un compteur d'erreurs de balise stocké dans le serveur, et dans lequel la balise est déterminée comme étant défectueuse lorsque le compteur d'erreurs de balise dépasse un seuil d'erreurs de balise.

10. Serveur selon la revendication 9, dans lequel la mémoire contient en outre des instructions exécutables par machine qui, lorsqu'elles sont exécutées sur le processeur, amènent le processeur à :
recevoir des instructions définissant un état d'utilisation d'une ou plusieurs balises dans le réseau ferroviaire à désactiver ;
identifier à partir d'une base de données de trains réguliers, une liste de véhicules ferroviaires bimodaux devant dépasser la ou chaque balise désactivée ; et
envoyer une alerte à tous les véhicules ferroviaires bimodaux sur la liste des véhicules ferroviaires bimodaux indiquant l'état d'utilisation de la ou de chaque balise désactivée.

11. Serveur selon la revendication 9, dans lequel la mémoire contient en outre des instructions exécutables par machine qui, lorsqu'elles sont exécutées sur le processeur, amènent le processeur à :
recevoir, depuis chacun de la pluralité de véhicules ferroviaires bimodaux, un signal de balise correspondant à une balise donnée des une ou plusieurs balises, ainsi que des données de localisation indiquant la localisation du véhicule ferroviaire bimodal respectif lorsqu'il a reçu le signal de balise ;
comparer un identifiant de la balise donnée à une liste de balises connues ; et
ajouter l'identifiant de la balise donnée à la liste des balises connues lorsque la comparaison constate que la balise donnée n'est pas dans la liste des balises connues.

12. Procédé pour surveiller un réseau ferroviaire, le réseau ferroviaire incluant :
un premier véhicule ferroviaire bimodal et un second véhicule ferroviaire bimodal, configurés chacun pour fonctionner à la fois sur des sections électrifiées et non électrifiées du réseau ferroviaire ;
une ou plusieurs balises, localisées à des emplacements en bordure de voie respectifs, qui diffusent un signal de balise indiquant une transition d'une section électrifiée du réseau ferroviaire à une section non électrifiée du réseau ferroviaire, ou vice versa ; et
un serveur, connecté aux premier et second véhicules ferroviaires bimodaux ;
dans lequel le procédé inclut les étapes consistant à :
recevoir, au niveau du serveur et à partir du premier véhicule ferroviaire bimodal, un ou plusieurs parmi :
le signal de balise, reçu par le premier véhicule ferroviaire bimodal à partir d'une balise donnée ; et
un signal de localisation, indiquant la localisation du premier véhicule ferroviaire bimodal dans le réseau ferroviaire ; et
déterminer, à partir du signal de balise et/ou du signal de localisation, lequel parmi : la balise donnée, le premier véhicule ferroviaire bimodal et le second véhicule ferroviaire bimodal est défectueux ;
dans lequel la détermination que le premier ou le second véhicule ferroviaire bimodal est défectueux inclut une incrémentation, lorsqu'il a été vérifié qu'aucun signal de balise n'a été reçu depuis la balise dépassée, d'un compteur d'erreurs de train, et une détermination que le premier ou le second véhicule ferroviaire bimodal est défectueux lorsque le compteur d'erreurs de train pour le premier ou le second véhicule ferroviaire bimodal est supérieur à un seuil d'erreurs de train ;
dans lequel la détermination que la balise est défectueuse inclut une vérification qu'aucun signal de balise n'a été reçu depuis la balise lorsque le premier véhicule ferroviaire bimodal a dépassé la balise donnée et une constatation, à partir d'un signal de localisation supplémentaire indiquant la localisation du second véhicule ferroviaire bimodal, que le second véhicule ferroviaire bimodal n'a pas non plus reçu le signal de balise depuis la balise lorsque le second véhicule ferroviaire bimodal a dépassé la balise donnée ; et
dans lequel chaque véhicule ferroviaire bimodal qui dépasse la balise sans recevoir le signal de balise provoque l'incrémentation d'un compteur d'erreurs de balise stocké dans le serveur, et dans lequel la balise est déterminée comme étant défectueuse lorsque le compteur d'erreurs de balise dépasse un seuil d'erreurs de balise.
